# EUROPEAN PATENT APPLICATION

(11) **EP 4 621 927 A1**
(43) Date of publication of application: **24.09.2025**
(21) Application number: 23907742.3
(22) Date of filing: 20.12.2023
(51) Int. Cl.: H01M 10/44, H01M 10/058, H01M 4/505, H01M 4/525, H01M 4/04

(54) **METHOD FOR MANUFACTURING LITHIUM SECONDARY BATTERY**

(30) Priority: 23.12.2022 KR 20220183696
(71) Applicant: LG Energy Solution, Ltd., Seoul 07335 (KR)
(72) Inventor: PARK, Jinseo, Daejeon 34122 (KR); SUNG, Kiwon, Daejeon 34122 (KR); KANG, Hyeyeon, Daejeon 34122 (KR); KANG, Bohyun, Daejeon 34122 (KR); JANG, Daeun, Daejeon 34122 (KR); JO, Youngseong, Daejeon 34122 (KR)
(74) Representative: Hoffmann Eitle
(86) International application number: PCT/KR2023/021128
(87) International publication number: WO 2024/136459

(57) **Abstract**

A method for manufacturing a lithium secondary battery includes preparing a battery cell including a positive electrode, a negative electrode, and an electrolyte. The positive electrode includes a lithium-rich manganese-based oxide in which a content of manganese in all metals excluding lithium is greater than 50 mol%, and a ratio of a number of moles of lithium to a number of moles of all metals excluding lithium (Li/Me) is greater than 1. The method further includes charging and discharging the battery cell at least one or more times to activate the battery. Activating the battery cell includes charging the battery cell from SOC 5 to 60 at a C-rate ranging from 0.6 to 1.0C, charging it at a C-rate of 0.3C~0.6C in an interval ranging from SOC 60 to 100, and then performing discharging once.

## Description

### [TECHNICAL FIELD]

### Cross Citation with Related Application(s)

This application claims the benefit of Korean Patent Application No. 10-2022-0183696 filed on February 23, 2022 in the Korean Intellectual Property Office, the disclosure of which is incorporated herein by reference in its entirety.

### Technical Field

The present disclosure relates to a method for manufacturing a lithium secondary battery, and more specifically, to a method for manufacturing a lithium secondary battery containing a lithium-rich manganese-based oxide which can improve a voltage drop generated during repeated charge and discharge.

### [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxides having a layered structure and having a molar ratio of lithium to transition metal of greater than 1 have been developed. Such a lithium-rich transition metal oxide can achieve high capacity by performing the activating step at a high voltage of 4.4V or more. However, when a high-voltage activation process is performed in this way, collapse of the crystal structure of the positive electrode is induced due to oxygen desorption, cation mixing, and the like in the crystal structure of the lithium-rich transition metal oxide, which may cause a problem that the discharge energy of the lithium secondary battery is greatly deteriorated, or voltage sagging (voltage drop) is caused during repeated charge and discharge.

### [Prior Art Literature]

### [Patent Literature]

Japanese Unexamined Patent Publication No. 5810320

### [DETAILED DESCRIPTION OF THE INVENTION]

### [Technical Problem]

The present disclosure has been designed to solve the above-mentioned problems, and therefore, an object of the present disclosure is to provide to a method for manufacturing a lithium secondary battery containing lithium-rich manganese-based oxide which can improve a voltage sagging generated during repeated charge and discharge.

### [Technical Solution]

According to one aspect of the present disclosure, there is provided a method for manufacturing a lithium secondary battery, the method comprising the steps of:
preparing a battery cell including a positive electrode, a negative electrode and an electrolyte, wherein the positive electrode includes lithium-rich manganese-based oxide in which the content of manganese in all metals excluding lithium is greater than 50 mol%, and a ratio of the number of moles of lithium to the number of moles of all metals excluding lithium (Li/Me) is greater than 1; and
charging and discharging the battery cell at least one or more times to activate the battery,
wherein the activating step includes charging the battery cell from SOC 5 to 60 at a C-rate of 0.6~1.0C, charging it at a C-rate of 0.3C~0.6C in the interval of SOC 60 to 100, and then performing discharging once.

The lithium-rich manganese-based oxide may be represented by the following Chemical Formula 1.

[Chemical Formula 1] LiₐNi_{b}Co_{c}Mn_{d}MₑO₂

wherein in Chemical Formula 1,
1 < a, 0≤b≤0.5, 0≤c≤0.1, 0.5≤d<1.0, 0≤e≤0.2, and
M is at least one selected from the group consisting of Al, B, Co, W, Mg, V, Ti, Zn, Ga, In, Ru, Nb, Sn, Sr and Zr.

The charging step may be performed in a constant current mode (CC mode) or a constant current-constant voltage mode (CCCV mode).

The end voltage of charge in the charging step may be 4.5V to 4.6V.

The activating step may include discharging at a C-rate of 0.3C to 0.7C until reaching 2.0V.

### [Advantageous Effects]

The method for manufacturing a lithium secondary battery according to the present disclosure performs charging at a C-rate of 0.3C to 0.6C in some intervals of the activation charging step, that is, in the interval of SOC 60 or more, and therefore can suppress the activation of the Li₂MnO₃ (monoclinic) phase in the crystal structure of the positive electrode active material, thereby suppressing a voltage sagging phenomenon generated during repeated charge and discharge and also reducing the generation of gas.

### [BRIEF DESCRIPTION OF THE DRAWINGS]

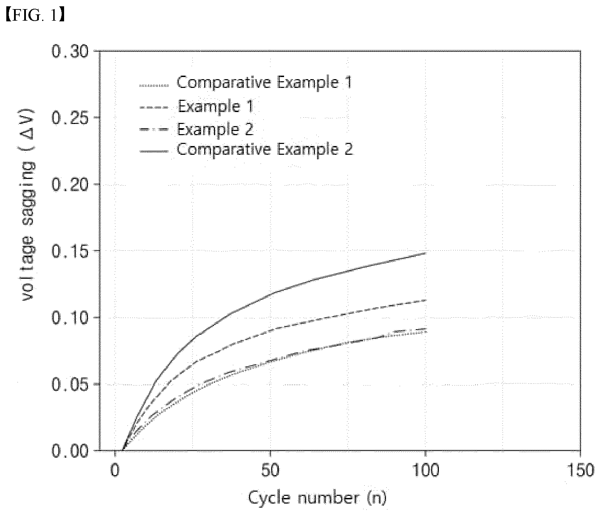

FIG. 1 is a graph showing the results of evaluating the voltage sagging after charging/discharging of the lithium secondary battery according to Experimental Example 1.

### [DETAILED DESCRIPTION OF THE EMBODIMENTS]

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own technology in the best way.

In the present disclosure, "primary particle" refers to a particle unit in which grain boundaries do not appear to exist when observed with the field of view of 5000 to 20000 magnification using a scanning electron microscope. "Average particle size of primary particles" refers to the arithmetic average value of primary particles observed in a scanning electron microscope image calculated after measuring their particle sizes.

In the present disclosure, "secondary particle" is a particle formed by agglomerating a plurality of primary particles.

In the present disclosure, "average particle size D₅₀" means a particle size at which cumulative volumes of powder particles (e.g., positive electrode active material, negative electrode active material, etc.) reach 50% in the particle size distribution curve of the particles. The D₅₀ can be measured using a laser diffraction method. It can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution, and determining the particle size corresponding to 50% of cumulative volume.

Further, in the present disclosure, "SOC X" refers to a state where the percentage of the capacity charged in the battery cell based on the discharge capacity appearing when the battery cell is discharged from 4.6 V to 2.0 V is X.

The present inventors have conducted repeated research to improve the voltage sagging during the charging step for activating a lithium secondary battery using lithium-rich manganese-based oxide, and as a result, found that by performing an activation process under specific charging conditions at the time of manufacturing a lithium secondary battery, it is possible to minimize cation mixing and oxygen desorption and suppress activation of the Li₂MnO₃ (monoclinic) phase in the crystal structure of the positive electrode active material, and prevent the voltage sagging during battery charging and discharging, and completed the present disclosure.

Now, the present disclosure will be described in detail.

A method for manufacturing a lithium secondary battery according to the present disclosure is characterized in that the method comprises a step of preparing a battery cell including a positive electrode, a negative electrode and an electrolyte, wherein the positive electrode includes lithium-rich manganese-based oxide in which the content of manganese in all metals excluding lithium is greater than 50 mol%, and a ratio of the number of moles of lithium to the number of moles of all metals excluding lithium (Li/Me) is greater than 1; and
a step of charging and discharging the battery cell at least one or more times to activate the battery,
wherein the activating step includes a step of charging the battery cell from SOC 5 to 60 at a C-rate of 0.6~1.0C, charging it at a C-rate of 0.3C~0.6C in the interval of SOC 60 to 100, and then performing discharge once.

### (1) Step of preparing battery cell

First, a battery cell including a positive electrode, a negative electrode, and an electrolyte is prepared.

The battery cell can be prepared, for example, by forming an electrode assembly including a positive electrode and a negative electrode, housing the electrode assembly in a battery case, and then injecting an electrolyte to seal a battery case. At this time, the electrode assembly may include a separator between the positive electrode and the negative electrode.

Each component of the battery cell according to the present disclosure will be described in more detail below.

### Positive electrode

The positive electrode according to the present disclosure includes lithium-rich manganese-based oxide in which the content of manganese in all metals excluding lithium is greater than 50 mol%, and the ratio of the number of moles of lithium to the number of moles of all metals excluding lithium(Li/Me) is greater than 1. Specifically, the positive electrode according to the present disclosure includes a positive electrode current collector, and a positive electrode active material layer formed on at least one surface of the positive electrode current collector, wherein the positive electrode active material layer includes a lithium-rich manganese-based oxide in which the ratio of the number of moles of lithium to the number of moles of all metals excluding lithium (Li/Me) is greater than 1.

In the case of lithium-rich manganese-based oxide containing excessive lithium, it has a structure in which a layered phase (LiM'O₂) and a rock-salt phase (Li₂MnO₃) are intermingled. While the rock-salt phase is activated during the initial activation process, excessive lithium ions are generated, thereby capable of achieving high capacity.

Preferably, the lithium-rich manganese-based oxide may be represented by the following Chemical Formula 1.

[Chemical Formula 1] LiₐNi_{b}Co_{c}Mn_{d}MₑO₂

wherein, in Chemical Formula 1, M may be at least one selected from the group consisting of Al, B, Co, W, Mg, V, Ti, Zn, Ga, In, Ru, Nb, Sn, Sr and Zr.

Meanwhile, a is the molar ratio of Li in the lithium-rich manganese-based oxide, and may be 1<a, 1.1≤a≤1.5, or 1.1≤a≤1.3.

The b is the molar ratio of Ni in the lithium-rich manganese-based oxide, and may be 0≤b≤0.5, 0.1≤b≤0.4 or 0.2≤b≤0.4.

The c is the molar ratio of Co in the lithium-rich manganese-based oxide, and may be 0≤c≤0.1, 0≤c≤0.08, or 0≤c≤0.05. If c is greater than 0.1, it is difficult to secure high capacity, and generation of gas and deterioration of the positive electrode active material become intensified, and the life-time characteristics may deteriorate.

The d is the molar ratio of Mn in the lithium-rich manganese-based oxide, and may be 0.5≤d<1.0, 0.50≤d≤0.80, or 0.50≤d≤0.70. If d is less than 0.5, the proportion of the rock-salt phase becomes too small, and thus the effects of negative electrode irreversibility compensation and capacity improvement are slight.

The e is the molar ratio of the doping element M in the lithium-rich manganese-based oxide, and may be 0≤e≤0.2, 0≤e≤0.1 or 0≤e≤0.05. If the content of the doping element is too high, it may have an adverse effect on the capacity of the active material.

Meanwhile, in the lithium-rich manganese-based oxide represented by [Chemical Formula 1], the ratio (Li/Me) of the number of moles of Li to the number of moles of all metal elements excluding Li may be 1.2 ~ 1.5, 1.25 ~ 1.5, or 1.25 ~ 1.4. When Li/Me ratio satisfies the above range, rate characteristics and capacity characteristics can excellently exhibit. When Li/Me ratio is too high, electrical conductivity may decrease, and the electrochemically-inactive rock-salt phase (Li₂MnO₃) may increase, which may increase the degradation rate. When Li/Me ratio is too low, the effect of improving energy density is slight.

Meanwhile, the composition of the lithium-rich manganese-based oxide may be represented by the following [Chemical Formula 2].

[Chemical Formula 2] X Li₂MnO₃ ·(1-X)Li[Ni_{1-y-z-w}Mn_{y}Co_{z}M_{w}]O₂

wherein, in [Chemical Formula 2], M may be at least one metal ion selected from the group consisting of Al, B, Co, W, Mg, V, Ti, Zn, Ga, In, Ru, Nb, Sn, Sr and Zr.

The X refers to the ratio of the Li₂MnO₃ phase in the lithium-rich manganese-based oxide, and may be 0.2≤X≤0.5, 0.25≤X≤0.5, or 0.25≤X≤0.4. When the ratio of the Li₂MnO₃ phase in the lithium-rich manganese-based oxide satisfies the above range, high capacity characteristics can be realized.

The y is the molar ratio of Mn on the LiM'O₂ layer, and may be 0.4≤y<1, 0.4≤y≤0.8, or 0.4≤y≤0.7.

The z is the molar ratio of Co on the LiM'O₂ layer, and may be 0≤z≤0.1, 0≤z≤0.08, or 0≤z≤0.05. When z is greater than 0.1, generation of gas and deterioration of the positive electrode active material may become intensified, and the life-time characteristics may deteriorate.

The w is the molar ratio of the doping element M on the LiM'O₂ layer, and may be 0≤w≤0.2, 0≤w≤0.1, or 0≤w≤0.05.

On the other hand, the positive electrode active material according to the present disclosure may further include a coating layer on the surface of the lithium-rich manganese-based oxide, if necessary. When the positive electrode active material includes a coating layer, contact between the lithium-rich manganese-based oxide and the electrolyte is suppressed by the coating layer, and side reactions of the electrolyte are reduced, thereby capable of obtaining the effect of improving life-time characteristics

The coating layer may include a coating element M¹, and the coating element M¹ may be, for example, at least one selected from the group consisting of Al, B, Co, W, Mg, V, Ti, Zn, Ga, In, Ru, Nb, Sn, Sr and Zr, preferably, Al, Co, Nb, W, and a combination thereof, and more preferably, Al, Co, and a combination thereof. The coating element M¹ may include two or more types, for example, Al and Co.

The coating element may be present in the coating layer, in oxide form, i.e., M¹Oz (1≤z≤4).

The coating layer can be formed through methods such as dry coating, wet coating, chemical vapor deposition(CVD), physical vapor deposition(PVD), and atomic layer deposition(ALD). Among these, it is preferable to form it through atomic layer deposition in that the coating layer can be formed to have a wider area.

The formation area of the coating layer may be 10 to 100%, preferably 30 to 100%, and more preferably 50 to 100%, based on the total surface area of the lithium-rich manganese-based oxide particles When the formation area of the coating layer satisfies the above range, the effect of improving life-time characteristics is excellent.

On the other hand, the positive electrode active material according to the present disclosure may be in the form of secondary particles in which a plurality of primary particles are agglomerated, and the average particle size D₅₀ of the secondary particles may be 2 µm to 10 µm, preferably 2 *µ*m to 8 *µ*m, and more preferably 4 *µ*m to 8 *µ*m. When the D₅₀ of the positive electrode active material satisfies the above range, the electrode density can be excellently achieved, and degradation of capacity and rate characteristics can be minimized.

Further, the positive electrode active material may have a BET specific surface area of 1m²/g ~ 10m²/g, 3 ~ 8m²/g or 4 ~ 6m²/g. If the BET specific surface area of the positive electrode active material is too low, the reaction area with the electrolyte is insufficient, which makes it difficult to achieve sufficient capacity. If the specific surface area is too high, moisture absorption is rapid and side reactions with electrolytes are accelerated, which makes it difficult to secure life-time characteristics.

On the other hand, the lithium-rich manganese-based oxide can be produced by mixing a transition metal precursor and a lithium raw material and then firing the mixture.

As the lithium raw material, for example, lithium-containing carbonates (e.g., lithium carbonate, etc.), hydrates (e.g., lithium hydroxide hydrate(LiOH·H₂O), etc.), hydroxides (e.g., lithium hydroxide, etc.), nitrates (e.g., lithium nitrate(LiNO₃), etc.), chlorides (e.g., lithium chloride(LiCl), etc.), and the like can be used, and among these, one type alone or a mixture of two or more types can be used.

On the other hand, the transition metal precursor may be in the form of hydroxides, oxides, or carbonates. When the carbonate form of the precursor is used, it is more preferable in that a positive electrode active material with a relatively high specific surface area can be produced.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and proceeding with a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄ MnCO₃, Mn(NO₃)₂, MnSO₄·H₂O, manganese acetate, manganese halide, and the like.

The ammonium cation complex forming agent may be at least one selected from the group consisting of NH₄OH, (NH₄)₂SO₄, NH₄NO₃, NH₄Cl, CH₃COONH₄, and (NH₄)₂CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, a hydroxide form of the precursor can be obtained, and when Na₂CO₃ is used as a basic compound, a carbonate form of the precursor can be obtained. Further, when a basic compound and an oxidizing agent are used together, an oxide form of the precursor can be obtained.

On the other hand, the transition metal precursor and the lithium raw material can be mixed in an amount such that the molar ratio of total transition metals (Ni+Co+Mn):Li is 1:1.05 ~ 1:2, preferably 1:1.1 ~ 1:1.8, and more preferably 1:1.25 ~ 1:1.8.

On the other hand, the firing may be performed at a temperature of 600°C to 1000°C or 700°C to 950°C, and the firing time may be 5 hours to 30 hours or 5 hours to 20 hours. Further, the firing atmosphere may be an air atmosphere or an oxygen atmosphere, for example, an atmosphere containing oxygen at 20 to 100% by volume.

On the other hand, the positive electrode active material layer may further include a conductive material and a binder in addition to the positive electrode active material.

Examples of the conductive material include spherical or flaky graphite; carbon-based material such as carbon black, acetylene black, KETJEN BLACK, channel black, furnace black, lamp black, thermal black, carbon fiber, single-wall carbon nanotubes, and multi-wall carbon nanotubes; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like. Among these, one type alone or a mixture of two or more types can be used. The conductive material can be contained in an amount of 0.1 ~ 20% by weight, 1 ~ 20% by weight, or 1 ~ 10% by weight based on the total weight of the positive electrode active material layer.

Further, the binder is a component that assists in adhesion between the positive electrode active materials and in an adhesive force between the positive electrode active material and the current collector, and examples thereof include a fluororesin binder including polyvinylidene fluoride(PVDF) or polytetrafluoroethylene(PTFE); a rubber-based binder including styrene-butadiene rubber (SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binders including polyethylene and polypropylene; a polyimide-based binder; a polyester-based binder; a silane-based binder, and the like. The binder may be contained in an amount of 1 ~ 20% by weight, 2~20% by weight, or 2~10% by weight based on the total weight of the positive electrode active material layer.

### Negative electrode

The negative electrode may include, for example, a negative electrode current collector and a negative electrode active material layer located on the negative electrode current collector. The negative electrode active material layer may optionally include a binder and a conductive material along with the negative electrode active material.

The negative electrode current collector is not particularly limited as long as it has high conductivity without causing a chemical change in the battery, and, for example, copper, stainless steel, aluminum, nickel, titanium, fired carbon, or copper or stainless steel of which surface is treated with carbon, nickel, titanium, silver, or the like, an aluminum-cadmium alloy, or the like may be used. Further, the negative electrode current collector may generally have a thickness of 3 µm to 500 µm. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material may comprise a lithium metal, a carbon material capable of reversibly intercalating/deintercalating lithium ions, metals or alloys of lithium and these metals, a material capable of doping and de-doping lithium, or a composite containing the metallic compound and the carbonaceous material, such as Si-C composite or Sn-C composite, and any one alone or a mixture of two or more thereof can be used.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (lowtemperature fired carbon) or hard carbon, mesophase pitch carbide, and fired cokes. Further, as the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used. Further, the material capable of doping and de-doping lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitchbased carbon fiber, meso-carbon microbeads, high-temperature sintered carbon such as mesophase pitches and petroleum or coal tar pitch derived cokes.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, KETJEN BLACK, channel black, furnace black, lamp black, thermal black, carbon fiber, and carbon nanotube; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one type alone or a mixture of two or more types of them can be used. The conductive material may typically be contained in an amount of 1 to 30% by weight, preferably 1 to 20% by weight, and more preferably 1 to 10% by weight, based on the total weight of the negative electrode active material layer.

The binder performs the role of improving adhesion between negative electrode active material particles and an adhesive force between the negative electrode active material and the negative electrode current collector. Specific examples thereof include a fluororesin binder including polyvinylidene fluoride(PVDF) or polytetrafluoroethylene(PTFE); a rubber-based binder including styrene-butadiene rubber(SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binders including polyethylene and polypropylene; a polyimide-based binder; a polyester-based binder; a silane-based binder, and the like, and any one type alone or a mixture of two or more types of them can be used. The binder may be contained in an amount of 1 to 30% by weight, preferably 1 to 20% by weight, and more preferably 1 to 10% by weight, based on the total weight of the negative electrode active material layer.

The negative electrode active material layer may be prepared, for example, by coating a negative electrode slurry containing a negative electrode active material and optionally a binder and a conductive material onto a negative electrode current collector, and drying the coated slurry, or may be prepared by casting the negative electrode slurry on a separate support and then laminating a film peeled from the support on the current collector.

### Separator

The lithium secondary battery according to the present disclosure may further include a separator interposed between the positive electrode and the negative electrode. The separator separates the negative electrode and the positive electrode from each other, and provides a moving passage for lithium ions. The separator can be used without particular limitation as long as it is used as a separator in a typical lithium secondary battery. Particularly, it is preferable that the separator has a low resistance against the ion migration of the electrolyte and has an excellent ability to impregnate the electrolyte. Specifically, the separator may be a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof. Further, a typical porous nonwoven fabric, for example, a nonwoven fabric made of a glass fiber having a high melting point, a polyethylene terephthalate fiber or the like can be used. In addition, in order to secure heat resistance or mechanical strength, a coated separator containing a ceramic ingredient or a polymer material can be used, and may be optionally used as a single layer or multilayer structure.

### Electrolyte

The electrolyte used herein may include various electrolytes that can be used in lithium secondary batteries, such as an organic liquid electrolyte, an inorganic liquid electrolyte, a solid polymer electrolyte, a gel-type polymer electrolyte, a solid inorganic electrolyte, a melt-type inorganic electrolyte, or a combination thereof, and the type thereof is not particularly limited.

For example, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate(DMC), diethyl carbonate(DEC), methylethylcarbonate(MEC), ethylmethyl carbonate(EMC), ethylene carbonate(EC), or propylene carbonate(PC); an alcohol-based solvent such as ethyl alcohol or isopropyl alcohol; nitriles such as R-CN (wherein R is a linear, branched or cyclic hydrocarbon group having 2 to 20 carbon atoms, and may include a double bond aromatic ring or ether bond); amides such as dimethylformamide; dioxolanes such as 1,3-dioxolane; sulfolane; or the like.

The lithium salt can be used without any particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt that can be used herein may be LiPF₆, LiN(FSO₂)₂, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂ or the like. The concentration of the lithium salt may be preferably used in the interval of 0.1 to 5.0M.

Further, in order to improve the life-time characteristics of the battery, suppress the decrease of the battery capacity, improve the discharge capacity of the battery, etc., the electrolyte may further include an additive, in addition to the above electrolyte components. For example, the additive may be at least one selected from vinylene carbonate, vinyl ethylene carbonate, fluoroethylene carbonate(FEC), ethylene sulfate(Esa), trimethylene sulfate(TMS), methyltrimethylene sulfate(MTMS), 1,3-propanesultone (1,3-PS), 1,3-propenesultone, 1,4-butane sultone, lithium oxalyldifluoroborate(LiODFB), lithium bisoxalatoborate (LiBOB), fluorobenzene, triethanolamine, ethylenediamine, tetravinylsilane, lithium difluorophosphate(LiPO₂F₂, LiDFP) and LiBF₄, but are not limited thereto. The additive may be contained in an amount of 0.1 to 10% by weight, preferably 0.1 to 5% by weight, based on the total weight of the electrolyte.

On the other hand, the electrode assembly may be various forms of electrode assemblies well known in the art, for example, a jelly-roll type, a stacked type, a stacked and laminated type, or a stack and folding type electrode assembly, and the form thereof is not particularly limited.

The jelly-roll type electrode assembly can be produced by interposing a sheet-shaped separator between a sheet-shaped positive electrode and a sheet-shaped negative electrode and then winding it in one direction.

The stacked type electrode assembly can be produced by cutting a positive electrode, a separator and a negative electrode into a desired shape and then sequentially stacking the cut positive electrode/separator/ negative electrode.

The stacked and laminated type electrode assembly can be produced by a method of stacking a positive electrode, a separator and a negative electrode to produce a plurality of unit cells, stacking the plurality of unit cells with a separator interposed therebetween, and then laminating them through a method such as heating.

The stack and folding type electrode assembly can be produced by a method of stacking a positive electrode, a separator and a negative electrode to produce a plurality of unit cells, arranging the plurality of unit cells on one surface or both side surfaces of a long folding separator and then winding the folding separator.

On the other hand, as the battery case, various battery cases known in the art, for example, a cylindrical battery case, a prismatic battery case, or a pouch-type battery case, and the like can be used, and the type thereof is not particularly limited.

### (2) Activating step

Next, a step of charging and discharging the battery cell at least one or more times to electrically activate the battery is performed. The activating step is a step of charging and discharging the battery cell to impart electrical properties and forming a SEI (Solid Electrolyte Interphase) film on the electrodes to stabilize the battery.

In the present disclosure, the charging current in some sections of the activation charging steps is adjusted and the degree of activation of Li₂MnO₃ (monoclinic) after activation is adjusted, thereby capable of improving the voltage sagging generated during repeated charge and discharge. Specifically, by adjusting the charging current in some sections to a C-rate of 0.6C or less, the Li₂MnO₃ (monoclinic) structure changes to LiMO₂ (M=Ni, Co, Mn, etc.) with a rhombohedral structure, a compound of solid solution phase in which these are mixed is formed, and activation can proceed more stably, which can result in an improvement in the voltage sagging generated during repeated charge and discharge.

First, the charging may include a first charging step of charging up to SOC 5.

The first charging step may be performed at a C-rate of 0.3C or less, preferably 0.1C to 0.3C. When the charging rate in the first charging is faster than 0.3C, an SEI film may be formed unstably on the electrode surface. When the SEI film is formed unstably on the electrode surface, the SEI film is easily decomposed during battery operation to cause rapid deterioration of the electrode, which can result in a significant decrease in life-time characteristics.

The first charging step is preferably performed from SOC 0 to SOC 5, and when the charging capacity in the first charging step satisfies the above range, a strong and dense SEI film is formed on the electrode surface, and excellent life-time characteristics can be achieved.

On the other hand, the first charging step can be performed in a constant current mode (CC mode).

Next, the charging may include a second charging step of charging from SOC 5 to SOC 100. At this time, the second charging step may be performed in one step or two or more steps with different rates, if necessary.

If the second charging step is performed in one step, the second charging step may be performed at a C-rate of 0.3C or more, preferably 0.3C to 0.6C.

If the second charging step is performed at a C-rate of 0.3C to 0.6C, the charging time is increased, but instead the activation stability of Li₂MnO₃(monoclinic) can be increased. At this time, if the second charging step is performed at a C-rate that is relatively faster than the first charging step, the time required for the activation process is shortened and thus the production time of the battery can be shortened.

The second charging step, which is performed in one step, is preferably performed from SOC 5 to SOC 100. When the charge capacity in the second charging step satisfies the above range, it is possible to suppress the SEI film from being incompletely formed and to suppress oxygen desorption and cation mixing during the activating step, thereby minimizing the increase in positive electrode resistance and also achieving high capacity.

Further, when the second charging step is performed in two or more steps, it may include a 2-1 charging step which is performed at a C-rate of 0.3C to 1.0C, and a 2-2 charging step which is performed at a C-rate of 0.6C or less, specifically 0.3C to 0.6C.

At this time, the 2-1 charging step is performed from SOC 5 to SOC 60, and the 2-2 charging step is performed from SOC 60 to SOC 100.

If the second charging step is performed by first charging at a C-rate of 0.3C to 1.0C (2-1 charging step) and then charging at a C-rate of 0.3C to 0.6C (2-2 charging step) as described above, the charging time can be shortened and also the activation stability of Li₂MnO₃ (monoclinic) can be increased.

Meanwhile, the second charging step may be performed in a constant current mode (CC mode) or a constant current-constant voltage mode (CCCV mode).

When the second charging step is performed in a constant current-constant voltage mode (CCCV mode), the CC charging is performed while a C-rate of 0.3C to 0.6C is supplied until reaching the end voltage of charge, and when the end voltage of charge is reached, the CV charging may be performed in which the charging C-rate is sequentially decreased up to about 0.05C.

Meanwhile, the end voltage of charge in the second charging step may be 4.5V to 4.6V, specifically 4.6V. When the end voltage of charge in the second charging stage satisfies the above range, the lithium-rich manganese-based oxide is activated and high capacity characteristics can be realized.

Next, the activating step discharges the battery-cell charged through the first charging step and the second charging step. At this time, the discharge may be performed at a C-rate of 0.3C to 0.7C. When the discharge rate satisfies the above range, the activation time can be appropriately controlled and discharge capacity characteristics within a desired range can be achieved.

Meanwhile, the discharge may be performed in a constant current mode (CC mode).

Meanwhile, the end voltage of discharge may be 2.0V~3.0V, specifically 2.0V.

Meanwhile, the activating step is preferably performed under temperature conditions of 30°C to 75°C, more preferably 40°C to 45°C. When the activating step is performed in the above temperature range, the effect of realizing high capacity can be obtained through appropriate activation of Li₂MnO₃ (monoclinic) phase.

Further, the activating step may be performed under pressurized conditions, if necessary. The pressurization can be performed by mounting the battery-cell to a jig and then applying pressure to the battery-cell via the jig. When the activating step is performed under pressurized conditions, it has the advantage that gas generated during the activating step can be easily discharged.

Meanwhile, although this is not essentially required, the activating step may further include an aging step, if necessary. The aging step allows the electrolyte to be uniformly impregnated into the electrode assembly and stabilizes the battery, and may be performed before charging, during charging, and/or after discharging, and may be performed one or more times.

The aging step may be performed at a temperature of, for example, 20°C to 60°C, 20°C to 50°C, and preferably 30°C to 50°C. When the aging is performed at the above temperature, electrolyte impregnability and lithium mobility are improved so that activation can be performed more smoothly.

Hereinafter, the present disclosure will be described in more detail with reference to specific examples.

### [EXAMPLE]

### Comparative Example 1

### (Manufacture of battery cells)

A positive electrode active material: a conductive material: a PVDF binder were mixed at a weight ratio of 97 : 1 : 2 in N-methylpyrrolidone to prepare a positive electrode slurry. At this time, Li_{1.38}[Ni_{0.363}Co_{0.005}Mn_{0.642}]O₂ was used as the positive electrode active material, and carbon nanotube(CNT) was used as the conductive material. The positive electrode slurry was coated onto an aluminum current collector sheet, dried, and then rolled to manufacture a positive electrode.

A negative electrode active material: a conductive material: a binder were mixed at a weight ratio of 96:1:3 in water to prepare a negative electrode slurry. At this time, graphite was used as the negative electrode active material, a carbon black was used as a conductive material, and SBR and CMC were mixed and used at a weight ratio of 2:1 as the binder. The negative electrode slurry was coated onto a copper current collector sheet, dried, and then rolled to manufacture a negative electrode.

A separator was interposed between the positive electrode and the negative electrode manufactured as above to produce an electrode assembly, and the electrode assembly was inserted into a battery case, and then an electrolyte was injected therein, thereby manufacturing a battery cell.

### (Activating step)

After the battery cells were pre-aged for 2 days, the activating process of charging up to SOC 3 (0.2C) under a constant current mode at 45°C (first charging step), charging up to SOC 100 (0.33C) (end voltage of charge: 4.6V) under a constant current-constant voltage mode (0.05C CV cut-off) (second charging step), and then discharging up to 2.0V at a constant current of 0.6C was performed to manufacture a lithium secondary battery.

### Example 1

After the battery cell manufactured in Comparative Example 1 was pre-aged for 2 days, a lithium battery was manufactured in the same manner as in Comparative Example 1, except that the activating step of charging up to SOC 3 (0.2C) under a constant current mode at 45°C (first charging step), charging up to SOC 60 (1.0C) under a constant current mode (2-1 charging stage), charging up to SOC 100 (0.4C) (end voltage of charge: 4.6V) under a constant current mode (2-2) charging step, and then discharging up to 2.0V at a constant current of 0.6C was performed.

### Example 2

After the battery cell manufactured in Comparative Example 1 was pre-aged for 2 days, a lithium battery was manufactured in the same manner as in Comparative Example 1, except that the activating step of charging up to SOC 3 (0.2C) under a constant current mode at 45°C (first charging step), charging up to SOC 60 (1.0C) under a constant current mode (2-1 charging stage), charging up to SOC 100 (0.4C) (end voltage of charge: 4.6V) in a constant current-constant voltage mode (0.05C CV cut-off) (2-2 charging step), and then discharging up to 2.0V at a constant current of 0.6C was performed.

### Comparative Example 2

After the battery cell manufactured in Comparative Example 1 was pre-aged for 2 days, a lithium battery was manufactured in the same manner as in Comparative Example 1, except that the activating step of charging up to SOC 3 (0.2C) under a constant current mode at 45°C, charging up to SOC 100 (1.0C) (end voltage of charge: 4.6V) under a constant current mode, and then discharging up to 2.0V at a constant current of 0.6C was performed.

### [EXPERIMENTAL EXAMPLE]

### Experimental Example 1: Evaluation of voltage sagging

The charge/discharge of charging the lithium secondary batteries manufactured in Examples 1 and 2, and the secondary batteries manufactured in Comparative Examples 1 and 2 under 0.33C constant current-constant voltage mode (0.05C CV cut-off), and discharging to 2.0V at a constant current of 0.6C was set to one cycle, and 100 cycles were performed at high temperature (45°C).

At this time, the voltage after 50 cycles was measured, the voltage sagging ratio was calculated based on the voltage after the initial 1 cycle, and the results are shown in Table 1 below. In addition, the nominal voltage after discharge for each cycle was measured, and the ΔV (voltage sagging) was measured. The results are shown in FIG. 1 below.

**[Table 1]**

| | Voltage after 50 cycles (mV) | Voltage sagging ratio after 50 cycles (%) |
|---|---|---|
| Comparative Example 1 | 63.3 | - 1.8 |
| Example 1 | 89.6 | - 2.5 |
| Example 2 | 80.2 | - 2.1 |
| Comparative Example 2 | 115.4 | - 3.3 |

As shown in Table 1 and FIG. 1, it can be seen that in the case of the lithium secondary batteries of Examples 1 and 2, the voltage sagging ratio (voltage drop amount) is lower during charging and discharging processes of 50 cycles and 100 cycles, as compared to the lithium secondary battery of Comparative Example 2. In addition, it was confirmed that in the case of Comparative Example 1, the voltage sagging ratio rate is low, but the voltage itself after 50 cycles is low, which is problematic.

## Claims

1. A method for manufacturing a lithium secondary battery, comprising:
preparing a battery cell including a positive electrode, a negative electrode and an electrolyte, wherein the positive electrode includes a lithium-rich manganese-based oxide in which a content of manganese in all metals excluding lithium is greater than 50 mol%, and a ratio of a number of moles of lithium to a number of moles of all metals excluding lithium (Li/Me) is greater than 1; and
charging and discharging the battery cell at least one or more times to activate the battery,
wherein the activating of the battery includes charging the battery cell from SOC 5 to 60 at a C-rate ranging from 0.6C to 1.0C, charging the battery cell at a C-rate ranging from 0.3C to 0.6C in an interval of SOC ranging from 60 to 100, and then performing discharging once.

2. The method for manufacturing the lithium secondary battery according to claim 1, wherein the lithium-rich manganese-based oxide is represented by the following Chemical Formula 1.
[Chemical Formula 1] LiₐNi_{b}Co_{c}Mn_{d}MₑO₂
wherein,
1 < a, 0≤b≤0.5, 0≤c≤0.1, 0.5≤d<1.0, 0≤e≤0.2, and
M is at least one selected from the group consisting of Al, B, Co, W, Mg, V, Ti, Zn, Ga, In, Ru, Nb, Sn, Sr and Zr.

3. The method for manufacturing the lithium secondary battery according to claim 2, wherein in Chemical Formula 1, 1.1≤a≤1.5, 0.1≤b≤0.4, 0≤c≤0.05, 0.5≤d≤0.80, and 0≤e≤0.1.

4. The method for manufacturing the lithium secondary battery according to claim 1, wherein the charging of the battery cell is performed in a constant current mode (CC mode) or a constant current-constant voltage mode (CCCV mode).

5. The method for manufacturing the lithium secondary battery according to claim 1, wherein an end voltage of charge in the charging of the battery cell ranges from 4.5V to 4.6V.

6. The method for manufacturing the lithium secondary battery according to claim 1, wherein the activating of the battery cell further includes charging the battery cell from SOC 0 to SOC 5 at a C-rate ranging from 0.1C to 0.3C.

7. The method for manufacturing the lithium secondary battery according to claim 6, wherein the charging of the battery cell from SOC 0 to SOC 5 is performed in a constant current mode (CC mode).

8. The method for manufacturing the lithium secondary battery according to claim 1, wherein the activating of the battery cell includes discharging the battery cell at a C-rate ranging from 0.3C to 0.7C until reaching 2.0V.
